Europäisches Patentamt

European Patent Office

Office européen des brevets

(11) Veröffentlichungsnummer: **0 670 508 A1**

# EUROPÄISCHE PATENTANMELDUNG

(21) Anmeldenummer: **94119810.3**

(22) Anmeldetag: **15.12.94**

(51) Int. Cl.6: **G02B 6/42**, G02B 6/34

(30) Priorität: **05.03.94 DE 4407451**

(43) Veröffentlichungstag der Anmeldung:
**06.09.95 Patentblatt 95/36**

(84) Benannte Vertragsstaaten:
**ES FR GB IT NL**

(71) Anmelder: **ANT Nachrichtentechnik GmbH**
**Gerberstrasse 33**
**D-71522 Backnang (DE)**

(72) Erfinder: **Kuke, Albrecht, Dr.**
**Nelkenweg 2**
**D-71549 Auenwald (DE)**
Erfinder: **Schwaderer, Bernhard, Dr.**
**Kelterweinberge 64**
**D-71554 Weissach i.T. (DE)**
Erfinder: **Müller-Fiedler, Roland, Dr.**
**Riegeläckerstrasse 2**
**D-71229 Leonberg (DE)**
Erfinder: **Hauer, Heiner**
**Frühlingshalde 1**
**D-70743 Fellbach (DE)**
Erfinder: **Möss, Eberhard**
**Ludwig-Beck-Strasse 6**
**D-71540 Murrhardt (DE)**

(54) **Wellenlängenduplexer.**

(57) Auf der Oberseite (2) eines Siliziumträgers (1) befinden sich zwei miteinander fluchtende, anisotrop geätzte V-Nuten (3,3') mit Lichtwellenleitern (4,4'). Die Stirnflächen (5,5') der V-Nuten (3,3') sind jeweils mit einem wellenlängenselektiven Filter (6,6') beschichtet. Über einem der Filter (6) auf der Oberseite (3) des Trägers (1) befindet sich ein optisches Empfängerelement (7). Auf der Unterseite (8) des Trä- gers (1) befindet sich eine Vertiefung (9) mit einer Linse (10). Gesendetes Licht aus dem Lichtwellenlei- ter (4') mit der Wellenlänge $\lambda_2$ gelangt über den Filter (6'), die Linse (10) und den Filter (6) auf den Lichtwellenleiter (4). Empfangenes Licht aus dem Lichtwellenleiter (4) mit der Wellenlänge $\lambda_1$ wird am Filter (6) reflektiert und gelangt auf das Empfänger- element (7).

Fig. 1

Rank Xerox (UK) Business Services
(3.10/3.09/3.3.4)

Die Erfindung betrifft einen optischen Wellenlängenduplexer in Silizium-Mikromechanik.

Aus der DE 39 14 835 C1 ist ein solcher Wellenlängenduplexer bekannt. Auf einem ersten Träger aus einkristallinem Silizium ist eine anisotrop geätzte V-Nut mit einem Lichtwellenleiterende vorgesehen. Das Licht aus dem Lichtwellenleiter fällt auf eine geneigte wellenlängenselektive Filterschicht. Der reflektierte Lichtanteil der Wellenlänge wiederum fällt auf einen optischen Empfänger, der auf der Oberseite des ersten Siliziumträgers über der Filterschicht befestigt ist. Es ist ein zweiter Siliziumträger vorgesehen, der ebenfalls anisotrop geätzte Vertiefungen aufweist. In diesen Vertiefungen befinden sich eine Spiegelfläche, eine Kugellinse und ein optischer Sender. Die beiden Siliziumträger sind derart aufeinander angeordnet, daß Licht vom Sender über die Kugellinse, die Spiegelfläche, das wellenlängenselektive Filter zum Lichtwellenleiter gelängt. Die Anordnung kann durch Verschieben der Träger aufeinander justiert werden. Sie ist jedoch relativ aufwendig herzustellen.

Es ist Aufgabe der Erfindung, einen optischen Duplexer anzugeben, der sehr einfach aufgebaut ist.

Die Aufgabe wird durch einen Duplexer mit den Merkmalen des Patentanspruches 1 gelöst.

Vorteilhafte Weiterbildungen sind in den Unteransprüchen angegeben.

Auf der Oberseite eines Siliziumträgers befinden sich zwei miteinander fluchtende, anisotrop geätzte V-Nuten mit zwei Lichtwellenleitern. Die Stirnflächen der V-Nuten sind mit je einem wellenlängenselektiven Filter beschichtet. Über einem Filter befindet sich auf dem Träger ein optisches Empfängerelement. Auf der Unterseite des Trägers befindet sich eine Vertiefung mit einer Linse. Licht aus dem ersten Lichtwellenleiter mit der Wellenlänge $\lambda_2$ gelangt über das erste Filter, die Linse und das zweite Filter auf den zweiten Lichtwellenleiter. Licht aus dem zweiten Lichtwellenleiter mit der Wellenlänge $\lambda_1$ gelangt auf das Empfängerelement.

Vorteilhaft an der erfindungsgemäßen Lösung ist, daß hier nur eine Kugellinse verwendet werden muß. Ein weiterer Vorteil ist, daß für die Halterung des Strahlteilers keine gesonderte Vertiefung hergestellt werden muß. Der erfindungsgemäß angebrachte Strahlteiler hat auch nur einen Einfallswinkel von 35°. Dies ist vorteilhaft für den Entwurf der Filterschichten in Bezug auf Polarisationsunabhängigkeit, Kantenschärfe und Trennungsverhalten. Ein wichtiger Vorteil ist der geringere Platzbedarf und damit der höhere Nutzen bei der Herstellung. Für die Ätztechnik ist es von Vorteil, daß die mit geringer Tiefe geätzten V-Nuten für die Faserhalterung auf der Oberseite und die mit größerer Tiefe geätzte V-Nut für die Kugellinse auf der Unterseite des Substrates liegen. Dadurch lassen sich beide Ätzprozesse voneinander trennen, was zu einer höheren Genauigkeit bei der Ätzung führt.

Im folgenden wird ein Ausführungsbeispiel für einen erfindungsgemäßen Duplexer anhand der Zeichnung beschrieben.

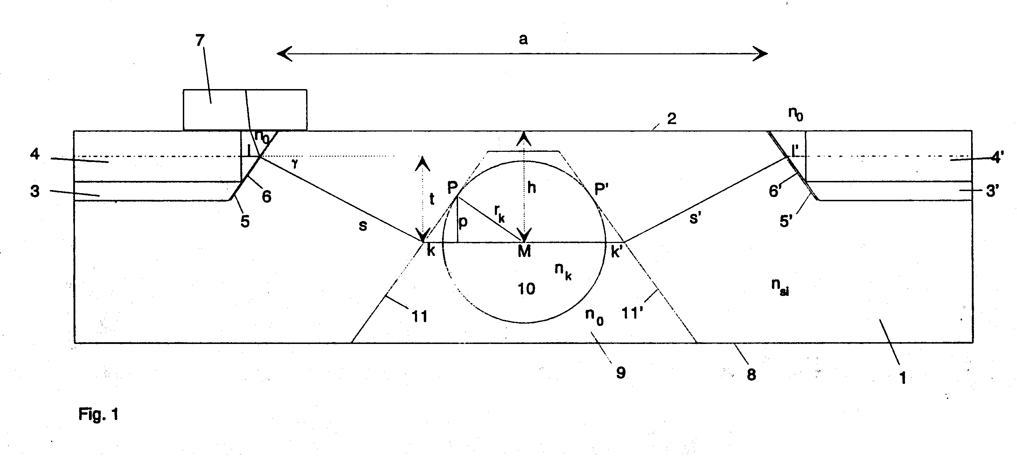

Figur 1 zeigt einen Querschnitt durch ein Ausführungsbeispiel. In einen Siliziumträger 1, dessen kristallographische (100)-Ebene in der Oberfläche liegt, sind von der Oberseite 2 zwei V-Nuten 3 und 3' anisotrop geätzt, so daß ihre Mittellinien miteinander fluchten und daß ihre Stirnflächen einen Abstand a voneinander haben. Die V-Nuten haben eine Breite und Tiefe, die so groß sind, daß eine standardgemäße Einmodenfaser mit einem Durchmesser von 125 $\mu$m so hineinpaßt, daß ihre oberste Mantellinie gerade in der Substratoberfläche liegt. In die V-Nuten sind Fasern 4,4' eingelegt. Eine der beiden Fasern 4 dient als Übertragungsfaser für das ankommende Licht mit der Wellenlänge $\lambda_1$ und das abgehende Licht mit der Wellenlänge $\lambda_2$. Die andere Faser 4' ist der Faserausgang eines Sendelasers mit der Wellenlänge $\lambda_2$. Die Fasern sind jeweils bis an die Stirnflächen 5 bzw. 5' der V-Nuten herangeschoben. Diese Stirnseiten sind mit wellenlängenselektiven Filtern 6 bzw. 6' beschichtet, die so dimensioniert sind, daß sie die Empfangswellenlänge $\lambda_1$ reflektieren und die Sendewellenlänge $\lambda_2$ durchlassen. Das Filter 6' könnte auch eine einfache Antireflexionsschicht für die Wellenlänge $\lambda_2$ sein, aus fertigungstechnischen Gründen dürfte es aber günstiger sein, hier die gleiche Schicht wie beim Filter 6 aufzubringen. Das aus der Übertragungsfaser 4 austretende Licht wird an der Filterschicht 6 schräg nach oben reflektiert und trifft dort auf eine Photodiode 7, die planar auf der Oberseite 2 des Silizium montiert ist.

Auf der Unterseite 8 des Siliziumträgers 1 wird ebenfalls durch anisotrope Ätzung eine pyramiden- oder pyramidenstumpfförmige Vertiefung 9 mit quadratischer Grundseite geätzt, die dazu dient, eine Kugellinse 10 mit dem Brechungsindex $n_k$ und dem Radius $r_k$ aufzunehmen. Das aus der Faser 4' austretende Licht der Wellenlänge $\lambda_2$ durchdringt die Filterschicht 6' und wird unter dem Winkel $\gamma$ schräg nach unten in das Silizium hineingebrochen. An der Seitenfläche 11' der Vertiefung 9, die parallel zur Stirnfläche 5' der Vertiefung 3' verläuft wird es wieder um den gleichen Winkel $\gamma$ zurückgebrochen, so daß es nun wieder parallel zu seiner ursprünglichen Strahlrichtung verläuft. Die Vertiefung 9 und die Kugellinse 10 werden in ihrer Größe so dimensioniert, daß der Mittelstrahl des Strahlbündels gerade durch den Kugelmittelpunkt verläuft. Die Brechzahl $n_k$ und der Radius $r_k$ der Kugellinse werden so ausgewählt, daß die optischen Wege zwischen dem Kugelmittelpunkt und den jeweiligen Stirnflächen der Fasern 4 und 4' unter Berücksichtigung der Brechzahlen der jeweils durchlaufenen Medien gleich der doppelten Brennweite der Kugellinse 10 sind.

Die Brennweite f der Kugellinse ist

$$f = r_k \cdot n_k / (2 \cdot (n_k - n_O)) \qquad (1)$$

Die Gegenstandsweite g und die Bildweite b sind dann

$$g = b = r_k \cdot n_k / (n_k - n_O) \qquad (2)$$

Die Schnittweiten, also der optische Abstand zwischen dem Linsenscheitel und dem Gegenstands- bzw. Bildpunkt sind

$$s_g = s_b = r_k \cdot n_o / (n_k - n_O) \qquad (3)$$

$n_k$ ist dabei der Brechungsindex der Kugellinse und $n_O$ der Brechungsindex im Außenraum. Der Außenraum kann entweder mit Luft oder mit einem transparenten Kleber gefüllt sein. Die Schnittweiten $s_g$ bzw. $s_b$ verlaufen jeweils in drei verschiedenen Wegstrecken, der Wegstrecke k zwischen der Kugelstirnfläche und der Seitenfläche 11 mit dem Brechungsindex $n_O$, der Wegstrecke s zwischen der Seitenfläche 11 und der Nut-Stirnfläche 5 mit dem Brechungsindex $n_{si}$ für Silizium und der Wegstrecke l zwischen der Nut-Stirnfläche 6 und der Faser 4 mit dem Brechungsindex $n_O$. Entsprechendes gilt für die gestrichenen Größen auf der Gegenstandsseite. Die geometrischen Längen der Strecken l und k liegen durch die Geometrie der anisotropen Ätzung und durch den Kugelradius $r_k$ und den Faserradius $r_f$ fest. Es gilt: fest. Es gilt:

$$l_{geom} = r_f / \sqrt{2} \qquad (4)$$
$$k_{geom} = r_k \cdot (\sqrt{3} / \sqrt{2} - 1) \qquad (5)$$

Die jeweiligen optischen Weglängen $l_{opt}$ und $k_{opt}$ erhält man durch Division der geometrischen Weglängen mit den entsprechenden Brechungsindizes. Die im Silizium verlaufende optische Wegstrecke $s_{opt}$ ist dann

$$s_{opt} = s_b - l_{opt} - k_{opt} \qquad (6)$$

Die für die Ausgestaltung wichtige geometrische Wegstrecke im Silizium $s_{geom}$ erhält man aus

$$s_{geom} = s_{opt} \cdot n_{si} \qquad (7)$$

Eine weitere für die Ausgestaltung wichtige Größe ist der Strahlablenkungswinkel $\gamma$. Er errechnet sich aus dem Einfallswinkel

$$\beta_O = \arctan(1/\sqrt{2}) = 35{,}3° \qquad (8)$$

und dem Snelliusschen Brechungsgesetz

$$\sin \beta_O / \sin \beta_{si} = n_{si} / n_O \qquad (9)$$

zu

$$\gamma = \beta_O - \beta_{si} \qquad (10)$$

Aus der Weglänge s (die nichtindizierten Größen bezeichnen die geometrischen Längen) im Silizium und dem Winkel $\gamma$ berechnet sich die Tiefe t des Kugelmittelpunktes unter der Fasermitte zu

$$t = s \cdot \sin \gamma \qquad (11)$$

Der Kugelmittelpunkt M liegt dann um

$$h = t + r_f \qquad (12)$$

unter der Substratoberfläche 2. Der Abstand a zwischen den Oberkanten der V-Nut-Stirnflächen 5 und 5' ist

$$a = 2 \cdot (r_k + k + s \cdot \cos \gamma - r_f / \sqrt{2}) \qquad (13)$$

Für die Funktion der erfindungsgemäßen Lösung wäre es nicht von Nachteil, wenn die Kugellinse zum Teil über die Substratoberfläche 2 hinausragt, solange die Auflagepunkte P, P' noch innerhalb des Substrates liegen. Die Punkte P, P' haben vom Kugelmittelpunkt den Abstand

$$p = r_k / \sqrt{3} \qquad (14)$$

Dies ergibt eine Randbedingung für die Auswahl der geometrischen und optischen Parameter. Eine weitere Randbedingung verlangt, daß das Substrat mindestens so dick ist, daß der Mittelpunkt der Kugel und der in der Kugel geführte Strahlquerschnitt ganz innerhalb der Substratdicke liegen. Der Radius des in der Kugel geführten Strahlbündels $r_s$ errechnet sich aus der numerischen Apertur NA der Faser und der Schnittweite zu

$$r_s = s_g \cdot \tan(\arcsin(NA)) \qquad (15)$$

Im folgenden sind zwei Zahlenbeispiele durchgerechnet, die aber weder die Gesamtheit aller möglichen Kombinationen noch die optimalen Verhältnisse darstellen sollen.

Beispiel 1: Kugellinse aus Glas mit einem Brechungsindex von 1,9747 bei einer Sendewellenlänge $\lambda_2$ von 1,55 $\mu$m, Radius der Kugel $r_k$ = 450 $\mu$m, kein Kleber im Bereich der Strecken l,l' und k,k', d.h. $n_O$ = 1, Faserradius $r_f$ = 62,5 $\mu$m, NA = 0,1; $n_{si}$ = 3,4777.

Man erhält folgende Ergebnisse:

$s_g$      = 461,7 $\mu$m

$r_s$ = 46,4 $\mu$m
p = 259,8 $\mu$m
s = 1100,3 $\mu$m
t = 477,2 $\mu$m
h = 539,7 $\mu$m
$\gamma$ = 25,7 °
a = 2996,6 $\mu$m

Beispiel 2: Kugellinse aus Silizium mit einem Brechungsindex von $n_{si}$ = 3,4777 bei $\lambda_2$ = 1,55 $\mu$m, Kugelradius $r_k$ = 200 $\mu$m, transparenter Kleber mit $n_O$ = 1,5 im Bereich der Strecken k,k' und l,l', Faser wie im Beispiel 1.

$s_g$ = 151,7 $\mu$m
$r_s$ = 15,2 $\mu$m
P = 115,5 $\mu$m
s = 320,6 $\mu$m
t = 113,8 $\mu$m
h = 176,3 $\mu$m
$\gamma$ = 20,8 °
a = 1000,6 $\mu$m

Alle Grenzflächen zwischen Luft bzw. Kleber und Silizium sollten entspiegelt sein Eine Entspiegelung der Faserstirnfläche bei Verwendung von Kleber kann eventuell entfallen. Im Bereich der Strecken k,k' und l,l' muß der gleiche Brechungsindex vorhanden sein, damit der Strahl parallel versetzt werden kann.

**Patentansprüche**

1. Wellenlängenduplexer mit folgenden Merkmalen:

a) Es ist ein Siliziumträger (1) aus einkristallinem Silizium vorgesehen;

b) in der Oberseite (2) des Siliziumträgers (1) befinden sich zwei miteinander fluchtende durch anisotropes Ätzen hergestellte V-Nuten (3,3') mit geneigten Stirnflächen (5,5');

c) in jeder V-Nut (3,3') ist ein Lichtwellenleiterende (4,4') befestigt;

d) in der Unterseite (8) des Siliziumträgers (1) befindet sich eine anisotrop geätzte pyramidenstumpf- oder pyramidenförmige Vertiefung (9);

e) in der Vertiefung (9) ist eine mikrooptische Linse (10) befestigt;

f) die Stirnfläche (5) mindestens einer V-Nut (3) ist mit einem wellenlängenselektiven Filter (6) beschichtet;

g) über der Stirnfläche (5) mit dem wellenlängenselektiven Filter (6) befindet sich auf der Oberseite (2) des Siliziumträgers (1) ein optisches Empfangselement (7), dessen lichtempfindliche Fläche der Stirnfläche (5) zugewandt ist;

h) die Abstände zwischen den Stirnflächen (5,5') der V-Nuten (3,3') und zwischen den optischen Achsen von Lichtwellenleitern (4,4') und Linse (10) sind derart bemessen, daß Licht möglichst verlustfrei vom ersten Lichtwellenleiter (4') zum zweiten Lichtwellenleiter (4) gelangen kann.

2. Wellenlängenduplexer nach Anspruch 1, dadurch gekennzeichnet, daß die Lichtwellenleiterenden (4,4') derart in den V-Nuten (3,3') befestigt sind, daß die Endflächen der Lichtwellenleiterenden (4,4') gegen die geneigten Stirnflächen (5,5') stoßen.

3. Wellenlängenduplexer nach einem der Ansprüche 1 oder 2, dadurch gekennzeichnet, daß die Linse (10) eine Kugellinse ist.

4. Wellenlängenduplexer nach einem der Ansprüche 1 bis 3, dadurch gekennzeichnet, daß das wellenlängenselektive Filter für die Empfangswellenlänge $\lambda_1$ reflektierend und für die Sendewellenlänge $\lambda_2$ durchlässig ist.

5. Wellenlängenduplexer nach einem der Ansprüche 1 bis 4, dadurch gekennzeichnet, daß der erste Lichtwellenleiter (4) mit einem optischen Sendeelement verbunden ist.

Fig. 1

**Europäisches Patentamt**

# EUROPÄISCHER RECHERCHENBERICHT

Nummer der Anmeldung

EP 94 11 9810

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A,D | DE-C-39 14 835 (ANT)<br>* Spalte 5, Zeile 48 - Spalte 6, Zeile 18 *<br><br>* Abbildung 5 *<br>--- | 1 | G02B6/42<br>G02B6/34 |
| A | DE-A-35 43 558 (B. HILLERICH UND M. RODE)<br>* Spalte 2, Zeile 49 - Spalte 3, Zeile 14 *<br><br>* Abbildung 1 *<br>--- | 1 | |
| A | LEOS' 90, Boston, Massachusetts,<br>4.-9. November 1990, Procedings,<br>Band 2, IEEE, G. E. Blonder:<br>'Silicon Optical Bench Research<br>at AT&T Bell Laboratories',<br>Seite 350-353<br>* der gesamte Artikel *<br>--- | 1 | |
| A | EP-A-0 325 152 (ANT)<br>* Spalte 3, Zeile 13 - Spalte 4, Zeile 21 *<br><br>* Abbildung 1 *<br>----- | 1 | **RECHERCHIERTE SACHGEBIETE (Int.Cl.6)**<br><br>G02B |

Der vorliegende Recherchenbericht wurde für alle Patentansprüche erstellt

| Recherchenort | Abschlußdatum der Recherche | Prüfer |
|---|---|---|
| DEN HAAG | 24. Mai 1995 | Luck, W |

**KATEGORIE DER GENANNTEN DOKUMENTE**

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes
    Dokument

EPO FORM 1503 03.82 (P04C03)